Europäisches Patentamt

European Patent Office

Office européen des brevets

(19)

(11) Veröffentlichungsnummer: **0 031 082**
**B1**

(12) **EUROPÄISCHE PATENTSCHRIFT**

(45) Veröffentlichungstag der Patentschrift:
28.09.83

(51) Int. Cl.³: **B 60 T 17/18**

(21) Anmeldenummer: 80107787.6

(22) Anmeldetag: 11.12.80

(54) In Kraftfahrzeugen zu verwendendes Mehrkreisschutzventil.

(30) Priorität: 18.12.79 DE 2950904

(43) Veröffentlichungstag der Anmeldung:
01.07.81 Patentblatt 81/26

(45) Bekanntmachung des Hinweises auf die Patenterteilung:
28.09.83 Patentblatt 83/39

(84) Benannte Vertragsstaaten:
FR GB IT

(56) Entgegenhaltungen:
DE-A-2 124 027
DE-A-2 143 733
DE-A-2 232 120
DE-A-2 452 171
DE-A-2 452 188
DE-B-1 950 698
DE-B-2 005 727
DE-B-2 101 572
DE-B-2 423 520
DE-B-2 558 844

(73) Patentinhaber: Graubremse GmbH, Eppelheimer
Strasse 76, D-6900 Heidelberg (DE)

(72) Erfinder: Müller, Wolfgang, Dipl.-Ing., Eisenacher
Weg 57, D-6800 Mannheim 31 (DE)
Erfinder: Grüner, Hans, Heidelberger Strasse,
D-6803 Edingen-Neckarhausen (DE)

(74) Vertreter: Patentanwälte Dipl.-Ing. Rudolf Bibrach
Dipl.-Ing. Elmar Rehberg, Pütterweg 6 Postfach 738,
D-3400 Göttingen (DE)

BUNDESDRUCKEREI BERLIN

In Kraftfahrzeugen zu verwendendes Mehrkreisschutzventil

Die Erfindung bezieht sich auf ein in Kraftfahrzeugen zu verwendendes Mehrkreisschutzventil mit einer Mehrzahl von Überströmventilen, insbesondere mit begrenzter Rückströmung, von denen je eines einem Kreis zugeordnet ist, mit einer gemeinsamen, zu den Einlaßsitzen der Überströmventile führenden Anströmung (Zentralbelüftung), wobei die Überströmventile teilweise einander zugeordnet und so Gruppen von Kreisen gebildet sind und innerhalb der gemeinsamen Anströmung der Überströmventile die gebildeten Gruppen von Überströmventilen jeweils nur durch eine einzige Leitung mit der gemeinsamen Anströmung in Verbindung stehen.

Derartige Mehrkreisschutzventile sind aus der DE-AS 2 101 572 oder auch aus Fig. 8 der DE-OS 2 232 120 bekannt. Von der gemeinsamen Anströmung kann Vorratsluft gleichrangig zu den Einlaßsitzen der Überströmventile gelangen, ohne zuvor über ein geöffnetes Überströmventil geströmt zu sein. Es sind dabei auch Gruppen gebildet, beispielsweise eine erste Gruppe von zwei Kreisen, die der zweikreisigen Betriebsbremse zugeordnet sind. Eine zweite Gruppe von Kreisen, die üblicherweise als Kreise III und IV bezeichnet werden, dienen beispielsweise der Versorgung einer Federspeicherbremse oder der Anhängerbremse einerseits und dem Betrieb von Nebenverbrauchern andererseits. Wesentlich ist zu erkennen, daß die beiden Gruppen von Kreisen durch eine einzige Leitung miteinander in Verbindung stehen und daß in dieser Leitung nichts angeordnet ist, also insbesondere kein Druckuntersetzer, kein Rückschlagventil od. dgl.

Aus der DE-OS 2 143 733, der DE-OS 2 232 120 und der DE-PS 2 558 844 sind Vierkreisschutzventile bekannt, die für vier Kreise ausgelegt sein können und bei denen wiederum eine Gruppenbildung zwischen den Kreisen I und II einerseits und den Kreisen III und IV andererseits vorgesehen ist. Vom Kompressor über den Druckregler gelieferte Luft kann in die Kreise III und IV nur dann gelangen, wenn sie zuvor wenigstens eines der Überströmventile der Kreise I und II überströmt hat. Hier tritt also eine bevorzugte Befüllung der Kreise I und II auf. Die Druckluft, die in die Kreise III und IV gelangt, ist hier nicht über die Druckluftbehälter der Kreise I und II geführt, so daß jedenfalls diese Druckluft in den Behältern der Kreise I und II nicht vorentwässert wird. Auch hier ist wiederum eine gemeinsame Anströmung bzw. Zentralbelüftung für die Gruppe der Luftversorgungskreise III und IV vorgesehen, wobei auch eine einzige gemeinsame Leitung zu diesem Knotenpunkt genutzt wird. In dieser Leitung befindet sich nichts. Der Leitung vorgeschaltet sind in den meisten Fällen zwei Rückschlagventile, die die Aufgabe haben, eine direkte Verbindung zwischen den Kreisen I und II zu verhindern; damit ist aber gleichzeitig der Nachteil verbunden, daß ein Luftaustausch zwischen den vier Kreisen nicht möglich ist.

Entsprechende Dreikreisschutzventile mit jeweils zwei Rückschlagventilen vor der gemeinsamen Anströmung des dritten Kreises zeigen die DE-PS 1 950 698 und die DE-AS 2 005 727. Diese Dreikreisschutzventile sind analog den zuvor beschriebenen Vierkreisschutzventilen aufgebaut und ausgestattet.

Die DE-OS 2 124 027 zeigt eine Zweileitungs-Zweikreis-Druckluftbremsvorrichtung mit einem Dreikreisschutzventil, dessen innerer Aufbau nicht im einzelnen beschrieben ist. Der Fachmann weiß jedoch, daß es sich dabei um ein Dreikreisschutzventil der zuvor beschriebenen Art handelt, also ohne Vorentwässerung und mit einem gemeinsamen Anströmpunkt für den dritten Kreis, dem ausgehend von den Kreisen I und II je ein Rückschlagventil vorgeschaltet ist. Nachgeschaltet zu dem Dreikreisschutzventil bzw. den beiden Druckluftbehältern der Kreise I und II ist für jeden Kreis je ein Druckbegrenzungsmittel vorgesehen, um unterschiedliche Drücke in der Betriebsbremse und der Anhängerbremse zur Verfügung zu haben. An sich werden nur zwei unterschiedliche Drücke benötigt, jedoch werden drei Druckbegrenzer als Steuerelemente entsprechend der Anzahl der Kreise eingesetzt und nachgeschaltet. Dieser Aufwand ist erheblich.

Die DE-AS 2 423 520 zeigt eine Druckluft-Versorgungseinrichtung mit einem Vierkreisschutzventil mit Vorentwässerung. Dabei wird die für die Kreise III und IV herangeführte Luft zunächst in den Druckluftbehältern der Kreise I und II vorentwässert, weil die Luft zunächst über diese Luftbehälter geführt wird, wie dies auch bereits bei dem Dreikreisschutzventil gemäß DE-PS 1 950 698 bekannt ist. Eine Druckbegrenzung in einem Teil der Kreise od. dgl. ist hier nicht vorgesehen oder beabsichtigt. Wird dagegen eine Druckbegrenzung bei einem derartigen Mehrkreisschutzventil gewünscht, so zeigt die DE-AS 2 452 171 oder auch die DE-OS 2 452 188 den Einsatz von zwei Druckbegrenzern, die den beiden Luftbehältern der Kreise I und II unmittelbar nachgeschaltet sind. Erst nach den Druckbegrenzern zweigen die Rückführleitungen zum Mehrkreisschutzventil für die Kreise III und IV ab. Wie ersichtlich, finden zwei Druckbegrenzer Verwendung, um zunächst einmal die Drücke in den Betriebsbremskreisen I und II zu mindern. Da die Rückführleitungen nach diesen Druckbegrenzern zum Mehrkreisschutzventil zurückführen, wirkt sich die Druckbegrenzung auch auf die Kreise III und IV aus. Bei einem früheren Abzweig der Rückführleitungen wäre es möglich, die Kreise III und IV mit ungeminderten, d. h. höherem Druck, zu versorgen. Es werden also auch hier zur Erzielung der gewünschten Druckminderung in zwei Kreisen zwei Druckminderer als Steuerelemente eingesetzt und nachgeschaltet.

Der Erfindung liegt die Aufgabe zugrunde, ein Mehrkreisschutzventil der eingangs beschriebenen Art derart weiterzubilden, daß mit möglichst geringem Aufwand, d. h. mit möglichst geringer Anzahl von Steuerelementen unterschiedliche Wirkungen an einzelnen Kreisen oder Gruppen von Kreisen erzielt werden. Erfindungsgemäß wird dies dadurch erreicht, daß wenigstens in einer dieser einzigen Leitungen ein Steuerelement oder mehrere verschiedenartige Steuerelemente in Reihe oder parallel geschaltet angeordnet ist und daß das Steuerelement oder die Steuerelemente eines oder mehrere der folgenden Bauteile sind:

a) Rückschlagventil
b) Druckuntersetzer
c) Druckbegrenzer
d) Überströmventil
e) Drossel
f) Absperrventil, steuerbar oder von Hand betätigt.

Die Erfindung wendet sich damit vom Stand der Technik ab, bei dem immer mehrere Steuerelemente entsprechend der Anzahl der jeweiligen Luftversorgungskreise vorgesehen sind und nutzt in geschickter Weise die Möglichkeit, in dieser bereits im Stand der Technik vorhandenen einzigen Leitung zwischen einer gemeinsamen Anströmung und einem oder mehreren zu einer Gruppe gehörenden Überströmventilen entsprechende Wirkungen zu erzeugen.

Unter Ausnutzung dieser Steuerelemente ergibt sich eine sehr große Anzahl von Schaltungsmöglichkeiten an einem Mehrkreisschutzventil, wobei die unterschiedlichsten Wirkungen auf sehr einfache Weise erzielbar sind. Einige Beispiele hierfür können der Figurenbeschreibung entnommen werden.

Dabei können die Überströmventile auf unterschiedlich hohe Öffnungsdrücke eingestellt sein und/oder unterschiedliche Teilwirkflächen aufweisen. Sofern ein Druckuntersetzer beispielsweise in eine der jeweils einzigen Leitungen eingeschaltet ist, ergibt sich insbesondere bei gleicher Einstellung des Öffnungsdruckes an allen Überströmventilen eine bevorzugte Befüllung der Kreise, die mit dem ungeminderten Druck direkt beaufschlagt werden. Sofern jedoch ein solcher Druckuntersetzer im Sinne seiner Hauptaufgabe der Druckuntersetzung nicht benötigt wird, kann die Reihenfolge der Öffnung der einzelnen Überströmventile trotzdem bewußt vorgegeben werden, indem man diese ohnehin vorhandenen Überströmventile für diese Aufgabe heranzieht bzw. ausbildet, so daß verschieden hohe Öffnungsdrücke vorhanden sind.

Die Erfindung wird anhand einiger Ausführungsbeispiele näher erläutert, und zwar zeigt
Fig. 1 ein Mehrkreisschutzventil in einer ersten Ausführungsform,
Fig. 2 ein Mehrkreisschutzventil in einer zweiten Ausführungsform,
Fig. 3 ein Mehrkreisschutzventil in einer dritten Ausführungsform,
Fig. 4 ein Mehrkreisschutzventil in einer vierten Ausführungsform,
Fig. 5 ein Mehrkreisschutzventil in einer fünften Ausführungsform, und
Fig. 6 ein Mehrkreisschutzventil in einer sechsten Ausführungsform.

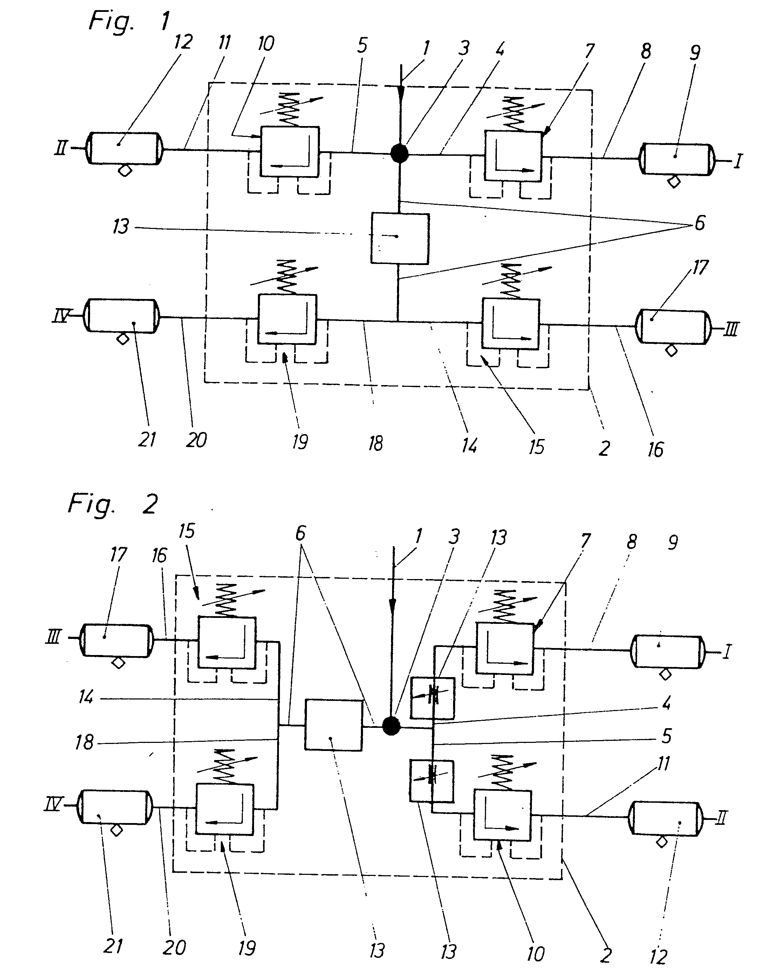

Das Mehrkreisschutzventil gemäß Fig. 1 ist als Vierkreisschutzventil ausgebildet. Es dient zur Versorgung der Kreise I, II und III und IV. Über eine Leitung I gelangt die Druckluft von einer Druckluftbeschaffungsanlage, die beispielsweise aus einem Kompressor und einem Druckregler bestehen kann oder auch nur einen selbststabilisierenden Kompressor aufweist, zu dem Mehrkreisschutzventil 2, welches durch die gestrichelte Einrahmung verdeutlicht wird. Die Leitung I führt in dem Mehrkreisschutzventil 2 zu einem gemeinsamen Anströmpunkt 3, von dem drei einzige Leitungen 4, 5 und 6 ausgehen. Die einzige Leitung 4 führt zu einem Überströmventil 7 mit begrenzter Rückströmung, welches dem Kreis I zugeordnet ist. Eine abströmseitig vorgesehene Leitung 8 führt von dem Überströmventil 7 bzw. dem Mehrkreisschutzventil 2 zu einem Luftbehälter 9 des Kreises I, der, wie dargestellt, üblicherweise mit einer Entwässerung ausgestattet ist. Analog führt die einzige Leitung 5 von dem Anströmpunkt 3 zu einem Überströmventil 10 mit begrenzter Rückströmung des Kreises II. Auch hier ist eine Leitung 11 vorgesehen, die vom Mehrkreisschutzventil 2 zu einem Druckluftbehälter 12 führt. In den einzigen Leitungen 4 und 5 ist nichts angeordnet.

Die dritte einzige Leitung 6 stellt die Verbindung zwischen dem gemeinsamen Anströmpunkt 3 und den beiden Kreisen III und IV her. In dieser einzigen Leitung 6 ist ein Steuerelement 13 angeordnet, welches aus einem der folgenden Bauteile bestehen kann:

a) Rückschlagventil
b) Druckuntersetzer
c) Druckbegrenzer
d) Überströmventil
e) Drossel
f) Absperrventil, steuerbar oder von Hand betätigt.

Eine Leitung 14 führt zu einem Überströmventil 15 des Kreises III, der über eine Leitung 16 mit zugehörigem Druckluftbehälter 17 versorgt wird. Ebenso führt eine Leitung 18 zu einem Überströmventil 19 und eine Leitung 20 zu einem Druckluftbehälter 21 des Kreises IV.

Die in sämtlichen Figuren dargestellten Überströmventile sind in der Regel solche mit begrenzter Rückströmung, also mit deutlich ausgebildeten Teilwirkflächen, von denen die eine gemäß dem verwendeten Symbol anströmseitig und die andere abströmseitig beaufschlagt wird. Der Öffnungsdruck der Überströmventile ist über eine Feder einstellbar.

Wenn das Steuerelement 13 beispielsweise als Druckuntersetzer (eingesteuerter Druck steht zum ausgesteuerten Druck in einem Untersetzungsverhältnis) oder Druckbegrenzer (der ausgesteuerte Druck kann einen bestimmten Maximaldruck nicht übersteigen) ausgebildet ist, dann entsteht gemäß Fig. 1 ein einfach aufgebautes Mehrkreisschutzventil 2, bei dem die Kreise I und II beispielsweise für eine zweikreisige Betriebsbremse mit Druckluft unter hohem Druck und die Kreise III und IV mit Druckluft unter untersetztem bzw. begrenztem Druck versorgt werden. Ist das Steuerelement 13 dagegen ein Rückschlagventil, dann wird auf diese Weise ein Luftaustausch aus den Kreisen III und IV in die Kreise I und II hinein verhindert, ein Luftaustausch zwischen den Kreisen III und IV dagegen ermöglicht.

In Fig. 2 ist ein ganz ähnlich aufgebautes Mehrkreisschutzventil 2 dargestellt. Es unterscheidet sich lediglich dadurch, daß in den einzigen Leitungen 4 und 5 zusätzlich je ein Steuerelement 13 vorgesehen ist, welches in der Ausführungsform gemäß Fig. 2 als verstellbare Drossel ausgebildet ist. Es wird insbesondere darauf hingewiesen, daß die Ausführungsform gemäß Fig. 2 mit derjenigen nach Fig. 1 identisch übereinstimmt, wenn man die beiden verstellbaren Drosseln in den einzigen Leitungen 4 und 5 außer Betracht läßt. Auf diese Weise soll aufgezeigt werden, daß trotz oberflächlich betrachteten, unterschiedlichen Aussehens tatsächlich identische Mehrkreisschutzventile 2 vorliegen können.

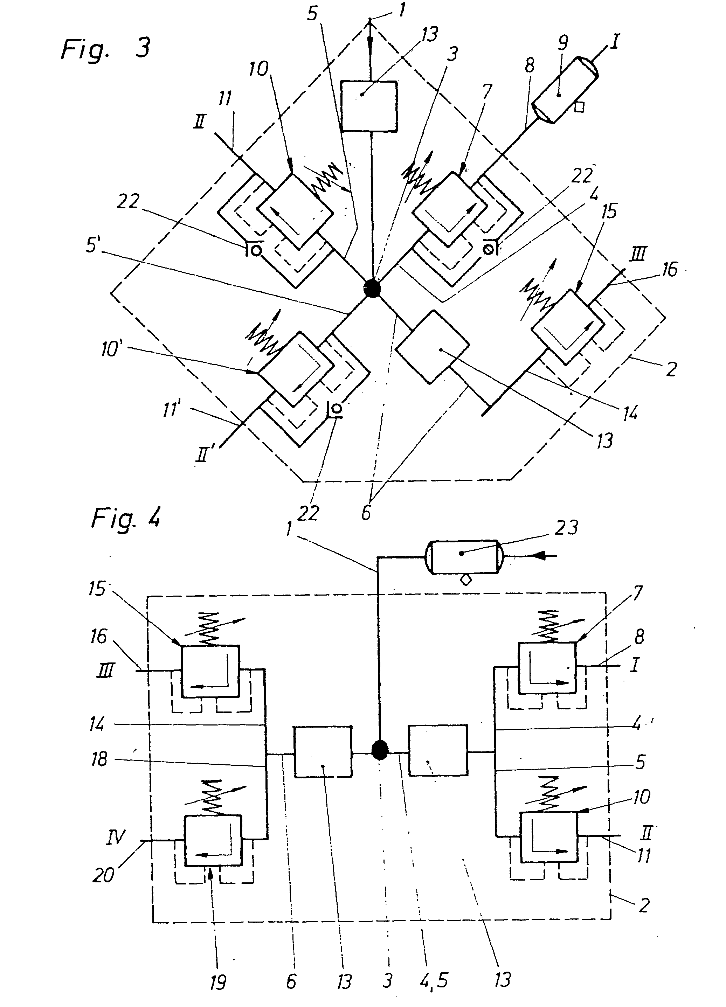

Bei der Ausführungsform gemäß Fig. 3 ist in der zu dem Anströmpunkt 3 führenden Leitung bereits ein Steuerelement 13 untergebracht, welches sich logischerweise auf sämtliche nachgeschalteten Kreise I, II, II', III usw. auswirkt. Es ist hier eine erste Gruppe von Kreisen I, II und II' vorgesehen, so daß in den einzigen Leitungen 4, 5 und 5' nichts vorgesehen ist. In der einzigen Leitung 6 ist jedoch wiederum ein Steuerelement 13 angeordnet, welches in seiner Wirkung auf die nachgeschaltete Gruppe von Kreisen, von denen nur der Kreis III dargestellt ist, sich auswirkt. Die Überströmventile 7, 10 und 10' sind von Rückschlagventilen 22 überbrückt, die in der dargestellten Richtung eingebaut sind. Dies bedeutet, daß hier Überströmventile mit Rückströmung im Mehrkreisschutzventil 2 angeordnet sind. Es versteht sich, daß die Rückschlagventile 22 immer mit den zugehörigen Überströmventilen baulich vereinigt sein können und innerhalb des Mehrkreisschutzventils 2 angeordnet sind. Grundsätzlich können anstelle von Überströmventilen mit begrenzter Rückströmung auch solche mit Rückströmung oder auch solche ohne Rückströmung Verwendung finden. Überströmventile ohne Rückströmung haben jedoch den Nachteil, daß auch bei intakter Anlage ein Druckausgleich zwischen einzelnen Behältern einer Gruppe oder aller Gruppen nicht möglich ist.

Fig. 4 zeigt eine Ausführungsform, bei der in der vom Kompressor hergeführten Versorgungsleitung zunächst ein Behälter 23 vorgesehen ist, so daß mit einem einzigen Behälter eine Vorentwässerung der Luft für sämtliche Kreise erzielbar ist, und zwar ohne daß umständliche Rückführleitungen zum Mehrkreisschutzventil vorgesehen sein müssen. In der einzigen Leitung 6 zu der Gruppe der Kreise III und IV ist auch hier ein Steuerelement 13 angeordnet. Die einzigen Leitungen 4 und 5 sind als Besonderheit hier zusammengefaßt. In dieser einzigen Leitung 4, 5 ist ein weiteres Steuerelement 13 angeordnet.

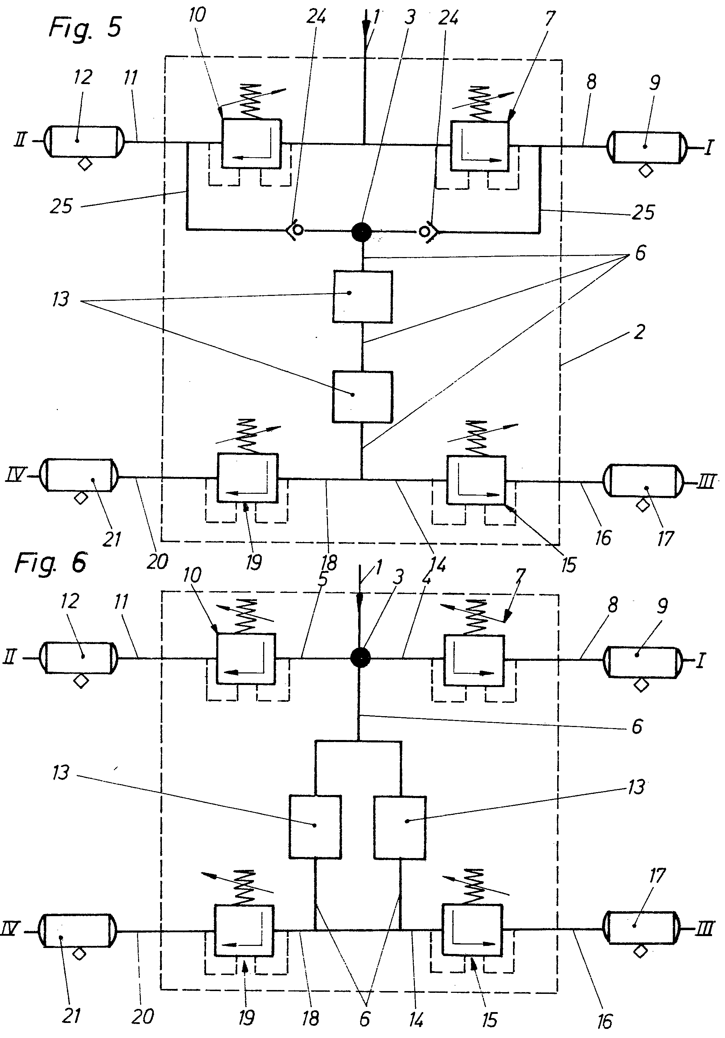

Das Mehrkreisschutzventil 2 gemäß Fig. 5 baut infolge von zusätzlich vorgesehenen Rückschlagventilen 24 auf einer Bauform auf, wie sie im Stand der Technik bezüglich der Kreise I und II oder auch der Kreise III und IV bekannt ist. Nach den Rückschlagventilen 24 ist hier der gemeinsame Anströmpunkt 3 gebildet, dem die einzige Leitung 6 nachgeschaltet ist, in der aber zwei Steuerelemente 13 in Reihe hintereinander vorgesehen sind. Wie man sieht, besitzt das Mehrkreisschutzventil 2 fünf Anschlüsse. Wird dagegen die gestrichelte Linie, also das Gehäuse des Mehrkreisschutzventils 2, etwas enger gezogen, dann entstehen sieben Anschlüsse an dem Mehrkreisschutzventil 2. Selbstverständlich können auch die Rückführleitungen 25, in denen die Rückschlagventile 24 vorgesehen sind, auch nach den Behältern 9 und 12 abzweigen und zurückführen.

Die Ausführungsform gemäß Fig. 6 des Mehrkreisschutzventils 2 weist die Besonderheit auf, daß die einzige Leitung 6 für die Kreise III und IV in Parallelschaltung zwei Steuerelemente 13 enthält.

Im folgenden sollen noch einige besonders vorteilhafte Ausführungsformen beschrieben werden, bei denen jeweils das oder die Steuerelemente in den Schaltungen gemäß Fig. 1 bis 6 durch ganz bestimmte Steuerelemente zu sehen sind:

In den gezeigten Beispielen können die Überströmventile 7, 10, 15 und 19 auf unterschiedlich hohe Öffnungsdrücke eingestellt und/oder mit unterschiedlichen Teilwirkflächen ausgebildet sein. Damit läßt sich auf einfache Weise beispielsweise eine Anlage betreiben, bei der die Reihenfolge der Belüftung der einzelnen Kreise I, II, III und IV oder von Gruppen der Kreise I, II, III und IV in ganz bestimmter Weise festgelegt ist. Unabhängig davon können auch die Schließdrücke der einzelnen Überströmventile 7, 10, 15 und 19 unterschiedlich hoch festgelegt werden.

Das Steuerelement 13 in Fig. 1 kann beispielsweise ein Rückschlagventil sein. Dann ergibt sich folgende Wirkungsweise:

Die Anordnung dieses Rückschlagventils gestattet den Luftaustausch zwischen gleichrangigen Kreisen, also zwischen den Luftbehältern der Kreise III und IV untereinander einerseits und den Luftbehältern der Kreise I und II untereinander andererseits. Ein Zurückfließen von Luft aus einem der Kreise III und IV in die vorgeschalteten

Kreise I und II wird dagegen verhindert. Obwohl damit im Gegensatz zum Stand der Technik, bei dem ähnlich wie in Fig. 5 immer Rückschlagventile Verwendung finden, nur ein Rückschlagventil zum Einsatz kommt, wird mit diesem vereinfachten Mittel die gleiche Wirkung erzielt. Außerdem verhindert das Rückschlagventil das Absinken der Behälterdrücke der Kreise III und IV in einem Defektfalle, wenn ein Defekt in einem der Kreise I oder II auftritt. Es wird also der volle Behälterdruck in den nachrangigen Kreisen III und IV abgesichert, so daß auch keine schleichende Notbremsung des Anhängers ausgelöst werden kann. Es versteht sich, daß den Kreisen III und IV nicht unbedingt Behälter zugeordnet oder Behälter in diesen Kreisen beinhaltet sein müssen. Es kann sich auch lediglich um Leitungen handeln.

Bei der Schaltung gemäß Fig. 2 kann das Steuerelement 13 beispielsweise als Druckbegrenzer ausgebildet sein. Dann ergibt sich folgende Wirkungsweise:

Die Anhängersteuerung möge am Kreis III angeschlossen sein. Es gibt gesetzliche Vorschriften für die maximale Druckhöhe in diesem Anlagenteil. Diese Druckhöhe läßt sich mit dem Druckbegrenzer verläßlich einstellen und einhalten und erlaubt dabei höhere Drücke in den Kreisen I und II, die insbesondere für die Betriebsbremse genutzt werden können. Damit ergibt sich der besondere Vorteil, beispielsweise die Behälter 9 und 12 infolge des hohen Druckes besonders klein bauen zu können, während dann später in der Anlage wieder eine Druckbegrenzung nachgeschaltet werden kann, um mit niederem Bremsdruck zu bremsen. Diese Druckbegrenzung kann beispielsweise im Bremsventil durchgeführt werden.

Bei der Anlage gemäß Fig. 3 kann das in der Leitung 1 vor dem Anströmpunkt 3 angeordnete Steuerelement 13 ein Rückschlagventil und das nach dem Anströmpunkt 3 in der einzigen Leitung 6 angeordnete Steuerelement 13 ein Druckbegrenzer sein. Dann ergibt sich folgende Wirkungsweise:

Eine solche Anlage erlaubt die Verwendung eines selbststabilisierenden Kompressors, der also ohne Druckregler in der Anlage eingebaut wird. Das Rückschlagventil der Leitung I verhindert damit einen Druckluftverlust aus den an den Anströmpunkt 3 angeschlossenen Kreisen während der Stillstandszeit des Kompressors. Von dem Anströmpunkt 3 führen hier drei gleichrangige Kreise I, II und II' ab. In der einzigen Leitung 6 bewirkt der dort vorgesehene Druckbegrenzer wiederum eine gleiche Arbeitsweise des Mehrkreisschutzventils, wie es anhand des vorangehend beschriebenen Ausführungsbeispiels dargelegt wurde.

Bei der Anlage gemäß Fig. 4 können die beiden Steuerelemente in der einzigen Leitung 4, 5 und 6 jeweils Druckbegrenzer sein, die unterschiedlich eingestellt sind. In Verbindung mit dem vorgeschalteten Behälter 23 kann die gesamte Druckluft der Druckluftbeschaffungseinrichtung im Hochdruckteil vorentwässert werden, so daß vor allen Dingen auch das Mehrkreisschutzventil 2 geschützt ist. Die gleichrangigen Kreise I und II werden dann mit Druckluft unter einem anderen Druck versorgt als die untereinander ebenfalls gleichrangigen Kreise III und IV. Gleichzeitig wird durch die Anordnung dieser Druckbegrenzer der Luftaustausch nur innerhalb der gleichrangigen Gruppe, nicht aber unter ungleichrangigen Gruppen von Kreisen ermöglicht.

Bei der Anlage gemäß Fig. 5 sind in der einzigen Leitung 6 in Reihe hintereinander zwei Steuerelemente 13 angeordnet, von denen in Durchflußrichtung das erste beispielsweise als Drossel und das zweite als von Hand verstellbarer Absperrhahn ausgebildet sein kann. Die Wirkungsweise dieser Anlage ist wie folgt:

Bei auftretenden Defekten innerhalb der Kreise III und/oder IV wird die Drosselwirkung ausgenutzt, um auf dynamischem Weg einen allzu großen Druckluftverlust zu verhindern. Außerdem ist das Wiederbefüllen, also das Nachspeisen, der intakten Kreise I und II durch die Drossel begünstigt. Um einen Notbetrieb aufrechtzuerhalten, kann mit Hilfe des von Hand in die Schließstellung überführbaren Absperrhahnes ein weiterer Druckluftverlust über einen nachgeschalteten defekten Kreis III oder IV gänzlich unterbunden werden. Bei einem Lastzug bedeutet dies beispielsweise bei einem Leck in der Vorratsleitung zum Anhänger (Kreis III), daß durch Umlegen des Absperrhahnes in die Schließstellung der Anhänger an Ort und Stelle stehenbleiben kann und das Zugfahrzeug bei voll intakter Betriebsbremse der Kreise I und II und durch eine mechanische Löseeinrichtung für die Federspeicherbremse am Kreis IV voll funktionstüchtig ist. Wird diese Anlage gemäß Fig. 5 beispielsweise in einem Omnibus eingesetzt, derart, daß über den Kreis III oder IV beispielsweise die automatische Türbetätigung versorgt ist, kann bei deren Defekt ebenfalls die Betriebsbremse voll funktionsfähig erhalten bleiben, während sich die Türen mechanisch öffnen und schließen lassen.

In der Anlage gemäß Fig. 6 sind in der einzigen Leitung 6 zwei Steuerelemente 13 parallel geschaltet. Eines dieser Steuerelemente kann eine Drossel und das andere möge ein Rückschlagventil sein, welches beispielsweise so eingebaut sein möge, daß es in Durchflußrichtung zu den Kreisen III und IV öffnet. Dann ergibt sich eine gedrosselte Rückströmung aus den Kreisen III und IV in die Gruppe der Kreise I und II, während diese Drosselwirkung in der normalen Befüllungsvorrichtung ausgeschaltet ist. Damit ergibt sich eine schnelle Fahrbereitschaft eines derart ausgerüsteten Fahrzeugs, und die Luft in den Kreisen III und IV kann auch in den Betriebsbremskreisen I und II verwendet werden. Auf diese Weise wird der Druckabfall, der beim Auslösen einer Bremsung entsteht, zwischen allen Kreisen wieder ausgeglichen, und damit einerseits auf einem Minimum gehalten, andererseits aber sichergestellt, daß weitere Bremsvorgänge mit gleichen Ausgangsdrücken in den verschiedenen Behältern der Kreise eingeleitet werden können.

Bei den verschiedenen Ausführungsbeispielen, bei denen jetzt Druckbegrenzer eingesetzt wurden, können an deren Stelle auch Druckuntersetzer eingesetzt werden, wobei sich eine ähnliche Wirkungsweise ergibt.

Insbesondere in der Anlage gemäß Fig. 1 ist in der einzigen Leitung 6 ein Steuerelement 13 angeordnet. Dabei kann beispielsweise vorgegeben sein, daß die Öffnungsdrücke der Kreise I und II etwa gleich groß, jedoch niedriger als die Öffnungsdrücke der Kreise III und IV eingestellt sind. Gemäß einer ersten Gleichung

$$P_{\ddot{O}I} \approx P_{\ddot{O}II} < P_{\ddot{O}III} \approx P_{\ddot{O}IV}$$

können darüber hinaus die Öffnungsdrücke der Kreise III und IV etwa gleich groß eingestellt sein. Daraus ergibt sich die Reihenfolge der Belüftung: I oder II, II oder I, III oder IV, IV oder III. Gemäß einer zweiten Gleichung

$$P_{\ddot{O}I} \approx P_{\ddot{O}II} < P_{\ddot{O}III} < P_{\ddot{O}IV}$$

ergibt sich die Reihenfolge der Belüftung: I oder II, II oder I, III, IV. Auf diese Weise läßt sich eine Priorität im Hinblick auf die Befüllung der Anlage eindeutig festlegen. So ist es beispielsweise für eine schnelle Fahrbereitschaft eines Feuerwehr-Fahrzeugs von Bedeutung, wenn der Kreis, an dem die Federspeicherbremszylinder des Fahrzeugs angeschlossen sind, die bei druckloser Anlage das Fahrzeug gebremst halten, als erste belüftet werden, so daß das Fahrzeug noch vor der vollständigen Auffüllung der Gesamtanlage von seinem Standort wegfahren kann.

**Patentansprüche**

1. In Kraftfahrzeugen zu verwendendes Mehrkreisschutzventil mit einer Mehrzahl von Überströmventilen (7, 10, 10′, 15, 19), insbesondere mit begrenzter Rückströmung, von denen je eines einem Kreis zugeordnet ist, mit einer gemeinsamen, zu den Einlaßsitzen der Überströmventile führenden Anströmung (Zentralbelüftung), wobei die Überströmventile teilweise einander zugeordnet und so Gruppen von Kreisen gebildet sind und innerhalb der gemeinsamen Anströmung der Überströmventile die gebildeten Gruppen von Überströmventilen jeweils nur durch eine einzige Leitung (4, 5, 5′, 6) mit der gemeinsamen Anströmung in Verbindung stehen, dadurch gekennzeichnet, daß wenigstens in einer dieser einzigen Leitungen (4; 5; 5′; 6) ein Steuerelement (13) oder mehrere verschiedenartige Steuerelemente (13) in Reihe oder parallel geschaltet angeordnet ist bzw. sind und daß das Steuerelement (13) oder die Steuerelemente (13) eines oder mehrere der folgenden Bauteile sind:

a) Rückschlagventil
b) Druckuntersetzer
c) Druckbegrenzer
d) Überströmventil
e) Drossel
f) Absperrventil, steuerbar oder von Hand betätigt.

2. Mehrkreisschutzventil nach Anspruch 1, dadurch gekennzeichnet, daß die Überströmventile (7; 10; 15; 19) auf unterschiedlich hohe Öffnungsdrücke (PÖ) eingestellt sind und/oder unterschiedliche Teilwirkflächen aufweisen.

**Claims**

1. Multi-circuit protection valve for use in motor vehicles. this valve possessing a plurality of overflow valves (7, 10, 10′, 15, 19) with, in particular, limited return flow, one of these overflow valves being allocated, in each case, to one circuit, and possessing a common inflow system (central venting system), leading to the inlet seats of the overflow valves, some of which are assigned to one another, and groups of circuits are thus formed, and the groups of overflow valves, formed within the inflow system which is common to the overflow valves, being in communication with the common inflow system via, in each case, only a single line (4, 5, 5′, 6), characterised in that a control element (13), or several control elements (13), of different types, is, or are, located in at least one of these individual lines (4; 5; 5′; 6), in series-connection or in parallel-connection, and in that the control element (13), or the control elements (13) is, or are, one or several of the following components:

a) non-return valve
b) pressure reducer
c) pressure limiter
d) overflow valve
e) restrictor
f) shut-off valve, which is controllable or manually operated.

2. Multi-circuit protection valve according to Claim 1, characterised in that the overflow valves (7; 10; 15; 19) are set to opening-pressures ($P_0$) of different magnitudes, and/or possess different partial working areas.

**Revendications**

1. Vanne de protection à plusieurs circuits pour véhicules automobiles, comportant un certain nombre de soupapes de trop-plein (7, 10, 10′, 15, 19) avec en particulier un retour limité, et dont chacune est attribuée à un circuit, une arrivée commune menant aux sièges d'admission des soupapes de trop-plein (alimentation centrale), de sorte que celles-ci sont conjuguées en partie les unes aux autres, et que des groupes de circuits sont ainsi formés, cependant qu'à l'intérieur de l'arrivée commune des soupapes de trop-plein, les groupes formés de celles-ci communiquent chacun par une conduite unique (4, 5, 5', 6) avec l'arrivée commune, caractérisée en ce qu'au moins dans une de ces conduites uniques (4, 5, 5', 6), un élément de commande (13) ou plusieurs éléments de commande (13) différents sont montés en série ou en parallèle et que le ou les éléments de commande (13) est ou sont un ou plusieurs des sous-ensembles suivants:

a) clapet anti-retour,

b) réducteur de pression,
c) limiteur de pression,
d) soupape de trop-plein,
e) étrangleur,
f) soupape d'arrêt, asservie ou actionnée à la main.

2. Vanne de protection à plusieurs circuits suivant la revendication 1, caractérisée en ce que les soupapes de trop-plein (7, 10, 15, 19) sont réglées à des pressions d'ouverture (P₀) de niveaux différents et/ou comportent des surfaces actives partielles différentes.

Fig. 1

Fig. 2

Fig. 3

Fig. 4

Fig. 5

Fig. 6

0 031 082